# EUROPEAN PATENT SPECIFICATION

(11) **EP 2 820 602 B1**
(45) Date of publication and mention of the grant of the patent: **28.10.2020**
(21) Application number: 13754963.0
(22) Date of filing: 01.03.2013
(51) Int. Cl.: G06Q 20/34, G06Q 20/40, G06Q 40/02, G06Q 20/38, G06Q 20/32

(54) **SYSTEMS AND METHODS FOR MAPPING A MOBILE CLOUD ACCOUNT TO A PAYMENT ACCOUNT**
SYSTEME UND VERFAHREN ZUR ZUORDNUNG EINES MOBILCLOUD-KONTOS ZU EINEM ZAHLUNGSKONTO
SYSTÈMES ET PROCÉDÉS DE MISE EN CORRESPONDANCE D'UN COMPTE EN NUAGE MOBILE À UN COMPTE DE PAIEMENT

(30) Priority: 01.03.2012 US 201261605588 P
(43) Date of publication of application: 07.01.2015
(73) Proprietor: Mastercard International, Inc., Purchase, NY 10577 (US)
(72) Inventor: SMITH, Theresa L., St. Albans$ Heart AL2 2JB (GB); MWANGI, John M., White Plains, New York 10601 (US); SHEPPARD, Christina E., Mamaroneck, New York 10543 (US)
(74) Representative: AWA Sweden AB
(86) International application number: PCT/US2013/028631
(87) International publication number: WO 2013/130982

(56) References cited:
- GB-A- 2 446 179
- KR-A- 20040 040 267
- KR-A- 20040 041 230
- US-A1- 2003 222 138
- US-A1- 2003 222 138
- US-A1- 2006 196 931
- US-A1- 2006 196 931
- US-A1- 2007 055 630
- US-A1- 2007 055 630
- US-A1- 2011 153 437

## Description

### RELATED APPLICATIONS

This application claims the priority benefit of commonly assigned U.S. Provisional Application No. 61/605,588, filed March 1, 2012, entitled "Systems and Methods for Mapping a Mobile Cloud Account to a Payment Account," by Theresa L. Smith et al.

### FIELD

The present disclosure relates to the mapping of a mobile cloud account to a payment account, specifically using a mobile cloud account to conduct contactless payment transactions without modification to legacy issuer processing systems.

### BACKGROUND

Advances in mobile and communication technologies have created tremendous opportunities, one of which is providing users of mobile computing devices, such as smart phones, the ability to conduct payment transactions using their mobile computing device. One approach to enable mobile computing devices to conduct payment transactions is through the use of near field communication (NFC) technology to securely transmit payment credentials from the mobile device to a contactless terminal. In many instances, a secure element chip included as part of the mobile device is utilized.

However, many payment account issuers utilize systems that are not configured to process contactless payment transactions. As a result, many payment account holders who possess NFC-capable mobile devices may not be able to take advantage of the convenient NFC technology. This may negatively affect not only the account holder, who is unable to conduct a contactless transaction using their mobile device, but also the account issuer, who may lose the business of the account holder should he or she choose to switch to an issuer capable of processing contactless transactions.

Thus, there is a need for a technical solution to facilitating the conducting of contactless payment transactions on a mobile device that does not require significant changes to legacy issuer processing systems.

The following documents form part of the prior art. US 2007/055630 A1 discloses a system and method for secured account numbers in proximity devices, US 2006/196931 A1 relates to credit card personalization using a wireless network, US 2003/222138 A1 discloses a system and method for authorizing transactions, GB 2446179 A discloses a system and method for providing transaction related information, and US 2011/153437 A1 discloses a system and method for providing virtual card services.

### SUMMARY

The present disclosure provides a description of systems and methods for mapping a mobile cloud account to a payment account, and the processing of financial transactions based therein. The description involves:

A method for mapping a payment account to a mobile cloud account number as defined in claim 1.

A system for mapping a payment account to a mobile cloud account as defined in claim 7.

A mobile device for providing payment credentials for a financial transaction as defined in claim 10.

A non-transitory computer readable recording medium as defined in claim 12.

### BRIEF DESCRIPTION OF THE DRAWING FIGURES

The scope of the present disclosure is best understood from the following detailed description of exemplary embodiments when read in conjunction with the accompanying drawings. Included in the drawings are the following figures:
FIG. 1 is a high level architecture illustrating a system for the mapping of mobile cloud accounts to payment accounts and processing of contactless payment transactions using a mobile cloud account in accordance with exemplary embodiments.
FIG. 2 is a block diagram illustrating data stored in the mobile device of FIG. 1 for the conducting of contactless payment transactions accordance with exemplary embodiments.
FIG. 3 is a process flow illustrating a method for the over-the-air provisioning of a master key identifier to a mobile device in accordance with exemplary embodiments.
FIGS. 4A and 4B are a process flow illustrating a method for the provisioning of mobile cloud account data to a mobile device in accordance with exemplary embodiments.
FIG. 5 is a flow chart illustrating a high-level method for the processing of an authorization request for a contactless payment transaction funded via a mobile cloud account in accordance with exemplary embodiments.
FIG. 6 is a process flow illustrating a method for the processing of contactless payment transaction funded via a mobile cloud account in accordance with exemplary embodiments.
FIG. 7 is a block diagram illustrating the provisioning of mobile cloud accounts to a mobile device in accordance with exemplary embodiments.
FIG. 8 is a block diagram illustrating the provisioning of mobile cloud account data to a secure element of a mobile device in accordance with exemplary embodiments.
FIG. 9 is a process flow illustrating a method for the mapping and cryptography of mobile cloud account data in accordance with exemplary embodiments.
FIG. 10 is a flow chart illustrating an exemplary method for the mapping of a payment account to a mobile cloud account in accordance with exemplary embodiments.
FIG. 11 is a flow chart illustrating an exemplary method for the processing of a financial transaction in accordance with exemplary embodiments.
FIG. 12 is a flow chart illustrating an exemplary method for providing payment credentials for a financial transaction in accordance with exemplary embodiments.
FIG. 13 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

### Definition of Terms

Payment Network - A system or network used for the transfer of money via the use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, financial accounts, etc. Examples of networks or systems configured to perform as payment networks include those operated by MasterCard®, VISA®, Discover®, American Express®, etc.

Payment Account - A financial account that may be used to fund a transaction, such as a checking account, savings account, credit account, virtual payment account, etc. A payment account may be associated with an entity, which may include a person, family, company, corporation, governmental entity, etc. In some instances, a payment account may be virtual, such as those accounts operated by PayPal®, etc.

Payment Card - A card or data associated with a payment account that may be provided to a merchant in order to fund a financial transaction via the associated payment account. Payment cards may include credit cards, debit cards, charge cards, stored-value cards, prepaid cards, fleet cards, virtual payment numbers, virtual card numbers, controlled payment numbers, etc. A payment card may be a physical card that may be provided to a merchant, or may be data representing the associated payment account (e.g., as stored in a communication device, such as a smart phone or computer). For example, in some instances, data including a payment account number may be considered a payment card for the processing of a transaction funded by the associated payment account. In some instances, a check may be considered a payment card where applicable. Payment cards may also include real card accounts having associated real card account numbers (RCAs) and mobile cloud accounts having associated mobile cloud account numbers (MCAs) as discussed in more detail herein.

### System for Mapping and Processing Mobile Cloud Accounts

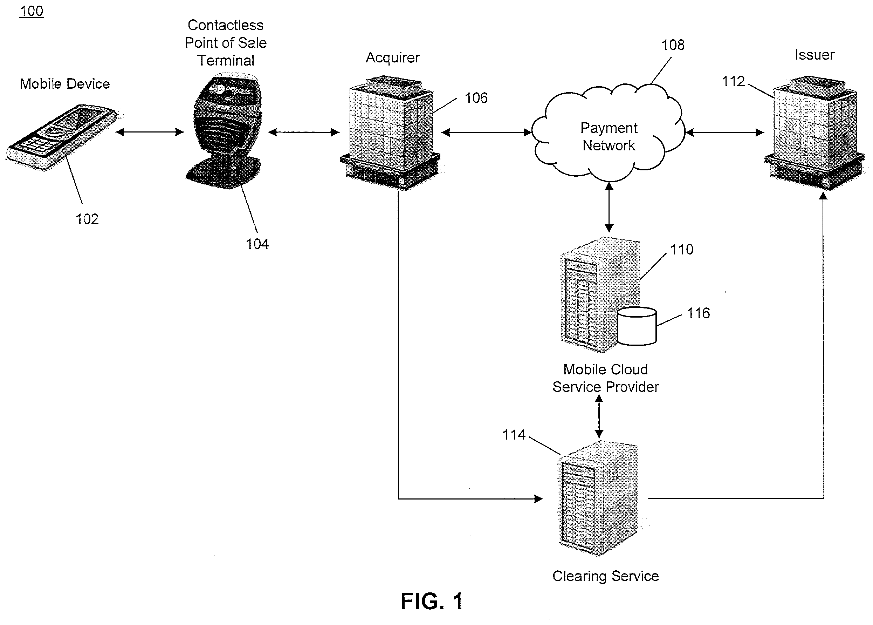

FIG. 1 is a high level diagram illustrating a system 100 for the mapping of mobile cloud accounts to payment accounts and the processing of financial transactions funded via mobile cloud accounts.

The system 100 may include a mobile device 102. The mobile device 102 may be any type of mobile computing device 102 suitable for performing the functions as disclosed herein as will be apparent to persons having skill in the relevant art, such as a cellular phone, smart phone, table computer, etc. The mobile device 102 may include a secure element. A secure element may be a tamper-resistant platform capable of securely storing data, such as a hardware chip. The secure element may store a master key identifier, which may be provisioned to the secure element at the time of the manufacture of the mobile device 102, or via an over-the-air (OTA) provisioning method, such as discussed in more detail below.

The mobile device 102 may also include data related to one or more mobile cloud accounts. A mobile cloud account may include a mobile cloud account number (MCA), which may be associated with a real card account number (RCA). The RCA may correspond to a payment account issued to the user by an issuer 112. The MCA may be mapped to the RCA such that the user may conduct a financial transaction using the MCA for funding of the financial transaction, and the funds may be supplied by the payment account corresponding to the RCA. As a result, the user may be able to conduct a payment transaction using the mobile device 102 without storing the RCA, thereby reducing the potential for fraud.

The user may indicate, using the mobile device 102, one of the MCAs to be used to fund a financial transaction while at a merchant. The mobile device 102 may execute a post issuance script, discussed in more detail below, configured to transmit mobile cloud account data into the secure element of the mobile device 102. The mobile device may then transmit payment credentials for the indicated mobile cloud account to a contactless point-of-sale terminal 104 via near field transaction. Methods and systems for the transmission of payment credentials via near field transaction will be apparent to persons having skill in the relevant art.

The contactless terminal 104 may transmit the payment credentials and other transaction information to an acquirer 106, such as an acquiring bank, operating as or on behalf of the merchant, who may then submit an authorization request for the financial transaction with the MCA included for funding of the transaction. The submission of authorization requests for a financial transaction will be apparent to persons having skill in the relevant art. The authorization request may be submitted to, and received by, a payment network 108.

The payment network 108 may identify the MCA included in the authorization request and may, based on attributes of the MCA, such as an issuer identification number (IIN) or bank identification number (BIN), route the authorization request to a mobile cloud service provider 110. The service provider 110 may include a mapping database 116 configured to store a plurality of mapping records, each of which may include at least a master key identifier, an MCA, and the corresponding RCA. The service provider 110 may identify the MCA included in the authorization request and then may identify the corresponding mapping record included in the mapping database 116. The service provider 110 may then transmit the corresponding RCA back to the payment network 108. It will be apparent to persons having skill in the relevant art that the service provider 110 may be any service, server, manager, system, etc. configured to perform the functions as disclosed herein. In some embodiments the service provider 110 may be included as part of the payment network 108 or may be operated by or on behalf of the issuer 112.

The payment network 108 may receive the RCA corresponding to the MCA supplied by the mobile device 102, and may forward the authorization request including the RCA to the issuer 112 for authorization. The issuer 112 may then authorize the financial transaction for funding by the payment account corresponding to the RCA and submit an authorization response to the payment network 108. The payment network 108 may then replace the RCA included in the authorization response with the MCA, and forward the authorization response to the acquirer 106, which may forward the response to the merchant for finalization of the transaction.

Following the finalization of the financial transaction, the acquirer 106 may post the financial transaction for clearing with a clearing service 114. In an exemplary embodiment, the clearing service 114 may transmit the posted transaction to the service provider 110. The service provider 110 may identify the RCA corresponding to the MCA included in the posted transaction using the mapping database 116, and may return the identified RCA to the clearing service 114. The clearing service 114 may then clear the transaction using the RCA with the issuer 112 using systems and methods apparent to persons having skill in the relevant art.

The use of the MCA may enable the user of the mobile device 102 to more securely conduct a contactless payment transaction without using an RCA. In addition, the issuer 112 may be able to process the financial transaction via the RCA without being required to significantly change their existing processing systems. In some embodiments, the service provider 110 may pre-validate the payment transaction based on the MCA and/or additional payment credentials. In such an embodiment, if the validation of the MCA fails, the service provider 110 (e.g., via the payment network 108) may transmit an authorization response to the acquirer 106 indicating denial of the transaction, and notify the issuer 112 of the failed validation. This may allow the transaction to be conducted without requiring any processing by the issuer 112. Conversely, if validation succeeds, the authorization may reach the issuer 112 pre-validated, which may enable the issuer 112 to approve or deny the transaction without being required to perform validation. Such a system may then not only enable the issuer 112 to process contactless payment transactions, but may also improve the efficiency of transaction processing.

### Mobile Device

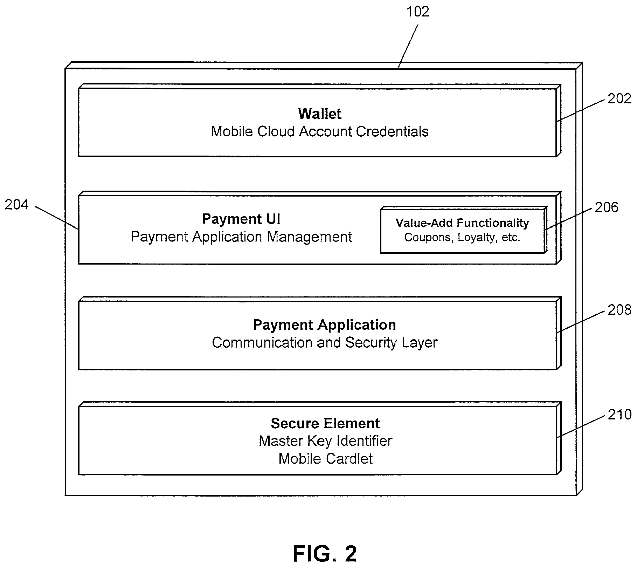

FIG. 2 illustrates data stored in the mobile device 102 for use in conducting contactless payment transactions via a mobile cloud account. The mobile device 102 may include a mobile wallet 202. The mobile wallet 202 may be an electronic wallet configured to store and transmit payment credentials for one or more mobile cloud accounts. The use of electronic wallets for the storage and transmission of payment credentials will be apparent to persons having skill in the relevant art. The mobile account credentials may include at least the MCA for each mobile cloud account and one or more security key certificates, as discussed in more detail below.

The mobile device 102 may also include a payment user interface (Ul) 204. The payment UI 204 may include an interface provided for the user for management of a payment application 208. The payment application 208 may be an application program stored on the mobile device 102 and executed by a processor of the mobile device. The payment application 208 may provide security for the functions performed by the mobile device 102 as disclosed herein, and may also facilitate communication between the internal components of the mobile device 102 as well as external communications, such as with the service provider 110. The payment Ul 204 and/or the payment application 208 may be downloaded and/or installed to the mobile device using methods and systems that will be apparent to persons having skill in the relevant art, such as the downloading of application data from an application store via the Internet.

The mobile device 102 may also include a secure element 210. As discussed above, the secure element 210 may be a tamper-resistant platform, such as a hardware chip. The secure element 210 may store at least a master key identifier and a mobile cardlet. In an exemplary embodiment, the master key identifier and the mobile cardlet may be stored in separate portions of the secure element 210. The master key identifier may be a value that is unique to the mobile device 102, such as a sixteen or nineteen digit number. Values suitable for use as the master key identifier will be apparent to persons having skill in the relevant art.

The master key identifier may be provisioned to the secure element 210 by the manufacturer of the mobile device 102 at the time of the manufacture of the mobile device 102. In some instances, the master key identifier may be provisioned to the mobile device 102 and stored in the secure element 210 via over-the-air (OTA) processing, as discussed in more detail below. The mobile cardlet may be similarly provisioned to the secure element 210 physically or via OTA processing. In some embodiments the mobile cardlet and master key identifier may be provisioned to the secure element 210 simultaneously.

The mobile cardlet may be configured to store mobile cloud account data for the transmission of payment credentials including the mobile cloud account data to the contactless terminal 104 for the conducting of a payment transaction. When a mobile cloud account is selected by the user for the funding of the payment transaction, the mobile device 102 may execute a post issuance script, discussed in more detail below, which may transmit payment credentials for the selected mobile cloud account to the secure element 210 (e.g., to the mobile cardlet). The user may then initiate transmission of the payment credentials from the mobile cardlet to the contactless terminal 104 to initiate the transaction.

In some embodiments, the payment Ul 204 may include additional functionality 206. The additional functionality 206 may be configured to provide the user of the mobile device 102 with additional functions, such as the application of coupons to contactless transactions conducted using the mobile device 102, participation in a loyalty program, receiving of offers or discounts, etc. Additional functions will be apparent to persons having skill in the relevant art, such as the inControl™ platform by MasterCard®. Details regarding inControl™ may be found in U.S. Patent No. 6,636,833, issued October 21, 2003; U.S. Patent No. 7,136,835, issued November 14, 2006; U.S. Patent No. 7,571,142, issued August 4, 2009; U.S. Patent No. 7,567,934, issued July 28, 2009; U.S. Patent No. 7,593,896, issued September 22, 2009; U.S. Patent Application No. 12/219,952, filed July 30, 2008; U.S. Patent Application No. 12/268,063, filed November 10, 2008; and U.S. Patent Application No. 12/359,971, filed January 26, 2009; each of which are herein incorporated by reference in their entirety.

### Provisioning of Master Key Identifiers and MCAs to the Mobile Device

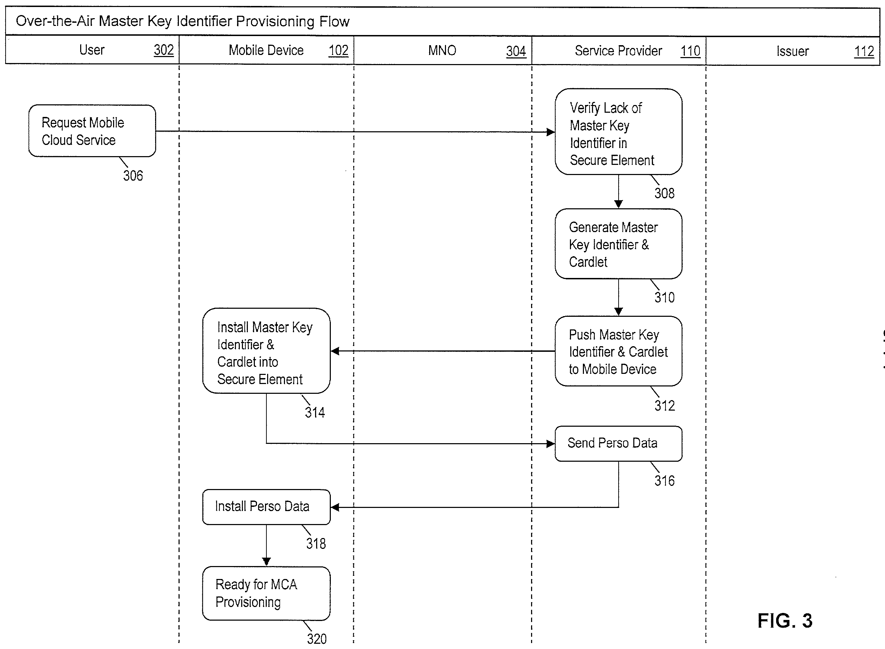

FIG. 3 is a process flow illustrating a method for the OTA provisioning of a master key identifier to the mobile device 102 for storage in the secure element 210.

In step 306, a user 302 may request to use the mobile cloud service on a mobile device 102 that lacks a master key identifier in a secure element 210 of the mobile device 102. The request may be submitted to the service provider 110 via a mobile network operator (MNO) 304. The service provider 110 may receive the request and may, in step 308, verify that the mobile device 102 does not already include a master key identifier. In an instance where, in step 308, the service provider 110 may identify that the mobile device 102 already includes a master key identifier in the secure element 210 (e.g., if the master key identifier was provisioned by the MNO or a third party (e.g., the mobile device manufacturer, secure element issuer, etc.) at the manufacture of the mobile device 102), the method may proceed to step 316, if applicable, or step 320 where the mobile device 102 may be ready to receive MCAs.

In step 310, the service provider 110 may generate a master key identifier and a mobile cardlet for provisioning to the mobile device 102. The master key identifier may be any unique value suitable for the identification of the mobile device 102 and/or the secure element 210. In an exemplary embodiment, the master key identifier may be a sixteen or nineteen digit number. In another exemplary embodiment, the master key identifier may be identified in outside of possible RCA account ranges such that the master key identifier may not correspond to a RCA. In a further embodiment, the first digit of a generated master key identifier may be zero. The mobile cardlet may be configured to store payment credentials for transmission to the contactless terminal 104 via near field communication. In an exemplary embodiment, the mobile cardlet may contain no payment credentials upon provisioning to the mobile device 102.

In step 312, the service provider 110 may push (e.g., transmit) the generated master key identifier and mobile cardlet to the mobile device 102 via the MNO 304. The mobile device 102 may receive the data and may, in step 314, install (e.g., store) the master key identifier and mobile cardlet into the secure element 210. In an exemplary embodiment, the master key identifier and mobile cardlet may be stored in separate portions of the secure element 210.

In step 316, the service provider 110 may identify (e.g., generate) personalization data and forward the personalization data to the mobile device 102. The personalization data may be data uniquely associated with the user 302 and/or the mobile device 102, as discussed in more detail below. In step 318, the mobile device 102 may receive and install the personalization data in the secure element 210. Then, in step 320, the mobile device 102 may be ready to receive MCAs for use in conducting contactless payment transactions.

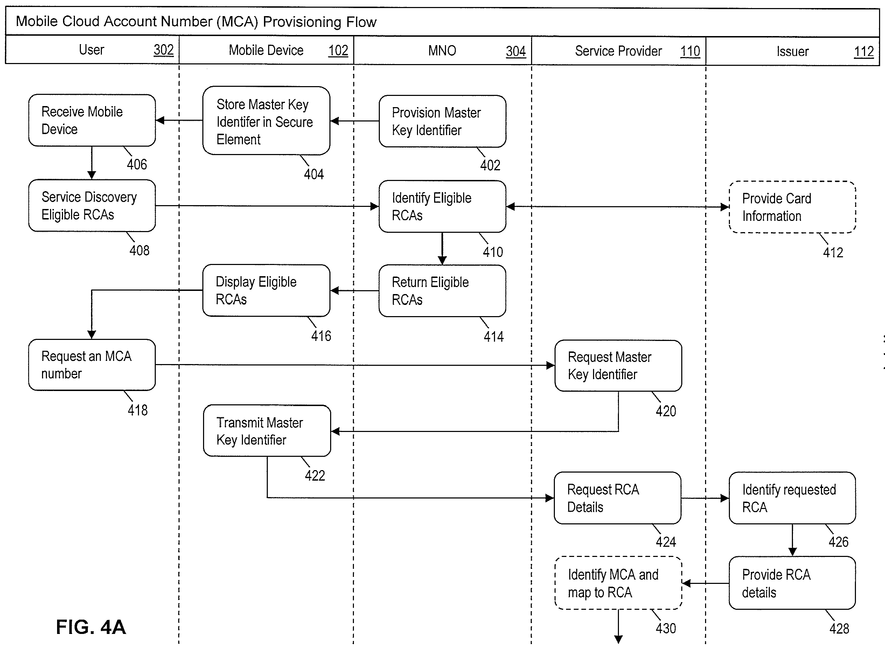

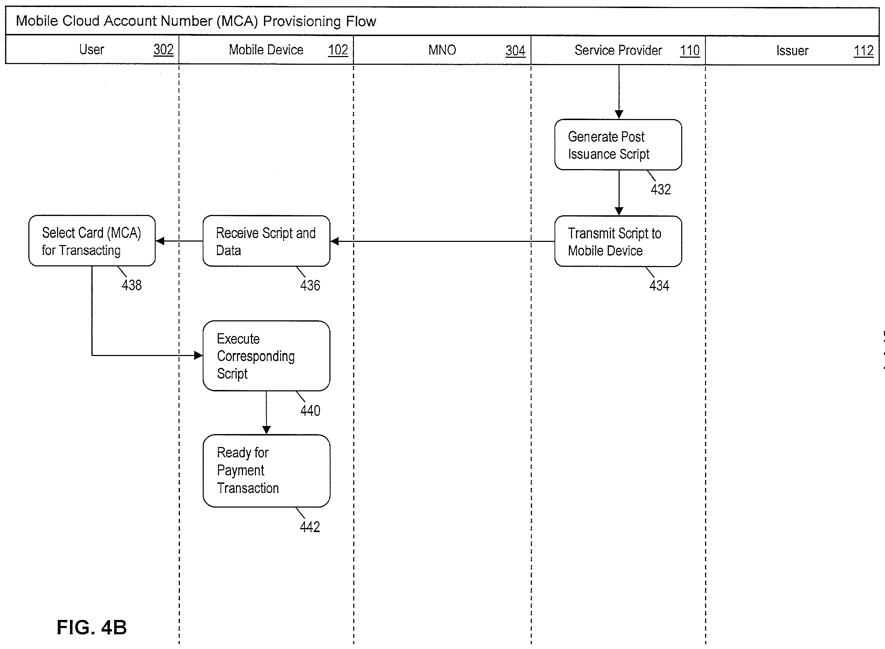

FIGS. 4A and 4B are a process flow illustrating a method for the provisioning of a mobile cloud account to the mobile device 102.

In step 402, the MNO 304 may provision the master key identifier to the mobile device 102. It will be apparent to persons having skill in the relevant art that, in some embodiments, the master key identifier may be provisioned to the mobile device 102 over the air, such as using the method illustrated in FIG. 3. In step 404, the mobile device 102 may receive the master key identifier and store the master key identifier in the secure element 210.

In step 406, the user 302 may receive the mobile device 102, such as by purchasing the mobile device 102, or may otherwise be in possession of the mobile device 102 with the master key identifier included in the secure element 210. In step 408, the user 302 may perform a service discovery to identify any RCAs associated with the user 302 that are eligible for use with the mobile cloud service. The service discovery may be performed by the MNO 304, in step 410, by identifying those RCAs associated with the user 302 eligible for the mobile cloud service. In some embodiments, the method may include step 412, where the issuer 112 may provide real card account information to the MNO 304 for use in the determination of eligible RCAs. For example, the MNO 304 may request specific card or issuer system details to determine if an RCA may be used in the mobile cloud service. In one embodiment, the identification of eligible RCAs may be performed by the service provider 110.

In step 414, the MNO 304 may transmit the eligible RCAs to the mobile device 102, for display to the user 302 at step 416 (e.g., via the payment Ul 204). It will be apparent to persons having skill in the relevant art that steps 408 and 416 may be performed via a computing device other than the mobile device 102, such as a computer where the user 302 may initiate the service discovery and view eligible RCAs via a webpage.

In step 418, the user 302 may request an MCA for a real card account. The request may be submitted to the service provider 110. The service provider 110 may then request the master key identifier from the secure element 210 of the mobile device 102. The mobile device 102 may identify the master key identifier in the secure element 210 and transmit it to the service provider 110 in step 422. The service provider 110 may then, in step 424, request details for the real card account identified by the user 302 from the issuer 112. The issuer 112 may identify the real card account in step 426 and then may, in step 428, provide the requested RCA details back to the service provider 110.

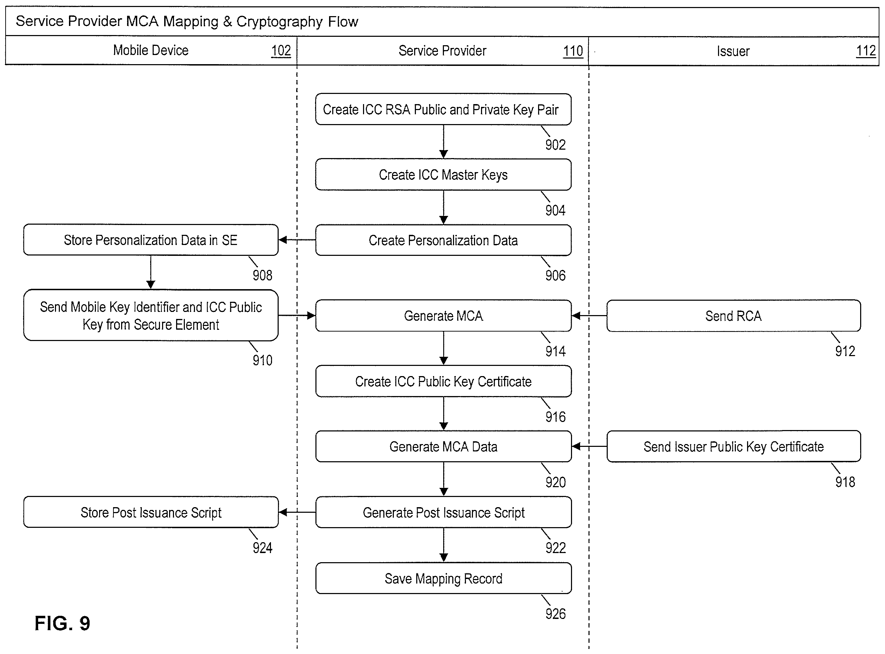

In step 430, the service provider 110 may identify an MCA to correspond to the RCA, may map the MCA to the RCA, and store a mapping record in the mapping database 116. Identification of the MCA is discussed in more detail below with respect to FIG. 9. In some embodiments, step 430 may be an optional step. In such an embodiment, the MCA may be identified by the issuer 112 and supplied directly to the service provider 110. The service provider 110 may validate the payment credentials for the MCA supplied by the issuer 112, but the issuer 112 may perform any necessary mapping as part of the processing of the financial transaction.

In step 432, the service provider 110 may generate a post issuance script. The post issuance script may be configured to cause the mobile device 102 to transmit mobile cloud account data for a selected MCA from a database or storage in the mobile device 102 to the mobile cardlet inside of the secure element 210. Data that may be included in the mobile cloud account data may include the MCA and additional information discussed in more detail below.

In step 434, the service provider 110 may transmit the post issuance script and related data to the mobile device 102, which may receive the script and data in step 436. In step 438, the user 302 may (e.g., via the display Ul 204), select an MCA for use in funding a contactless payment transaction. Once the MCA is selected, the mobile device 102 may execute the corresponding post issuance script. The execution of the script may cause the mobile device 102 to transmit the corresponding mobile cloud account data into the mobile cardlet in the secure storage 210. In some embodiments, the transmitted mobile cloud account data may overwrite an existing mobile cloud account data in the mobile cardlet such that the mobile cardlet may include data for only a single mobile cloud account at any given time. In step 442, the mobile device 102 may be ready for the contactless payment transaction (e.g., ready to transmit payment credentials to the contactless terminal 104 via near field communication).

### Processing Authorization Requests in Mobile Cloud Account Contactless Transactions

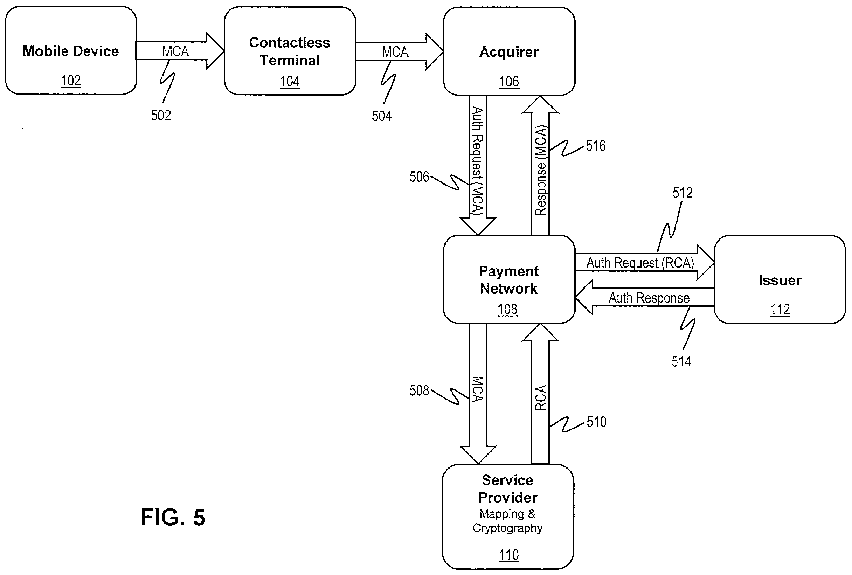

FIG. 5 is a high level flow diagram illustrating a method for processing an authorization request for a contactless payment transaction funded via an MCA initiated by the mobile device 102.

In step 502, the mobile device 102 may transmit the MCA and related payment credentials from the mobile cardlet in the secure storage to the contactless terminal 104 via near field communication. Methods suitable for the secure transmission of payment credentials via near field communication will be apparent to persons having skill in the relevant art. The contactless terminal 104 may receive the MCA and payment credentials and may, in step 504, forward the information to the acquirer 106. The acquirer 106 may then generate an authorization request using systems and methods apparent to persons having skill in the relevant art, wherein the authorization request includes the MCA and payment credentials.

The authorization request may be submitted by the acquirer to the payment network 108 in step 506. The payment network 108 may then, in step 508, forward at least the MCA to the service provider 110. The service provider 110 may receive the MCA and perform cryptography to validate the MCA using methods apparent to persons having skill in the relevant art. The service provider 110 may also, using the mapping database 116, identify an RCA corresponding to the MCA. The service provider 110 may then, in step 510, forward the identified RCA to the payment network 108.

In instances where validation of the MCA fails, the service provider 110 may return an indication of the failure of the validation to the payment network 108 and/or directly to the acquirer 106. In some embodiments, if verification fails, the service provider 110 may transmit a notification to the issuer 112. In a further embodiment, the issuer 112 may request to the service provider 110 to not be notified of any failed verifications. In one embodiment, the service provider 110 may still forward the RCA to the payment network 108 for forwarding to the issuer 112 if mapping succeeds but cryptography validation of payment credentials (e.g., a payment cryptogram) fails.

The payment network 108 may receive the RCA from the service provider 110 and may, in step 512, replace the MCA in the authorization request with the RCA and forward the authorization request to the issuer 112. In embodiments where the issuer 112 provides the MCA directly to the service provider 110 (e.g., such that the service provider 110 does not generate the MCA), the payment network may submit the authorization request including the MCA and the indication of the successful validation performed by the service provider 110, and the issuer 112 may map the MCA to the corresponding RCA. Once the issuer 112 has the authorization request and the RCA, the issuer 112 may approve or deny the financial transaction using systems, methods, and practices that will be apparent to persons having skill in the relevant art. The issuer 112 may then, in step 514, submit an authorization response to the payment network 108 indicating whether the transaction is approved or denied.

The payment network 108 may then replace the RCA in the authorization response with the MCA and forward the modified authorization response to the acquirer 106 for finalization of the transaction. In some embodiments, the payment network 108 may forward the authorization response including the RCA to the service provider 110 for replacement with the MCA via the mapping database 116.

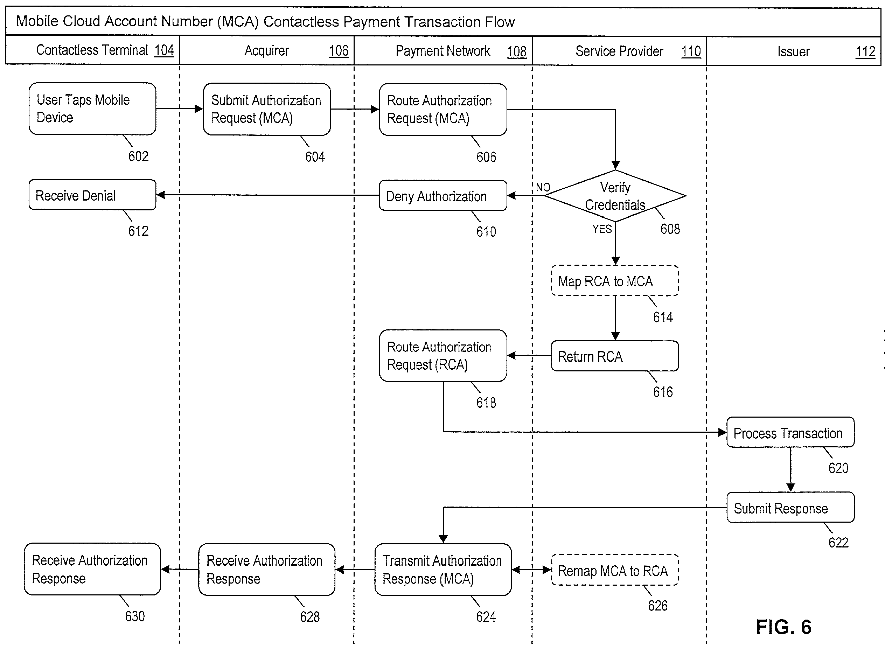

FIG. 6 is a process flow illustrating a more detailed method for the authorization of a contactless payment transaction funded via a mobile cloud account.

In step 602, the user 302 may "tap" the contactless terminal 104 using the mobile device 102 with payment credentials loaded into the mobile cardlet in the secure storage 210. The term "tapping" may refer to the transmission of payment credentials via near field communication from the mobile device 102 to the contactless terminal 104 due to the close proximity of the mobile device 102 to the terminal 104, which sometimes may result in the mobile device 102 physically tapping the terminal 104. The payment credentials may include a payment cryptogram, such as an authorization request cryptogram or dynamic card validation code, generated based on at least a portion of the mobile cloud account data stored in the secure element 210. The contactless terminal 104 may forward the payment credentials, including the MCA and payment cryptogram, to the acquirer 106, who may then submit an authorization request including the MCA and payment credentials to the payment network 108 in step 604.

In some embodiments, the mobile device 102 may also transmit additional credentials to the contactless terminal. For example, the credentials may include a mobile personal identification number (PIN), which may be a number input by the user 302 into the mobile device 102 prior or subsequent to indication of an MCA for use in the payment transaction. In another example, the credentials may include an online PIN, which may be input by the user 302 into the contactless terminal 104. In some instances, the contactless terminal 104 may prompt the user 302 to input the online PIN subsequent to the transmission of the payment credentials to the contactless terminal 104 and prior to the transmission of data to the acquirer 106.

In step 606, the payment network 108 may route the authorization request based on the MCA. For example, the number may indicate that the transaction is to be funded by an MCA, which the payment network 108 may identify needs to be mapped by the service provider 110 and accordingly forward the relevant information to the service provider 110. In some embodiments, the authorization request may originate from a different payment network, but may be forwarded to the payment network 108 and/or the service provider 110 for validation/verification and/or mapping. In a further embodiment, the verified and/or mapped credentials may be forwarded on to the issuer 112 for authorization, and then returned to the originating payment network. The processing of payment transactions across multiple payment networks will be apparent to persons having skill in the relevant art.

In step 608, the service provider 110 may receive the MCA and additional payment credentials if applicable and may verify (e.g., validate) the MCA and/or payment cryptogram or other credentials using cryptography methods and systems apparent to persons having skill in the relevant art. If the verification of the credentials fails, then, in step 610, the payment network 108 may receive an indication from the service provider 110 to deny the authorization. The payment network 108 may then submit an authorization response denying the transaction, which may then be forwarded to the contactless terminal in step 612. In some embodiments, the service provider 110 may submit a notification to the issuer 112 of the failed verification of the credentials. In a further embodiment, the service provider 110 may map the MCA used in the failed verification to identify the corresponding RCA and include the corresponding RCA in the notification.

If the credentials are successfully verified, then, in step 614, the service provider 110 may identify the RCA corresponding to the MCA via the mapping database 116. It will be apparent to persons having skill in the relevant art that, in some embodiments, step 614 may be an optional step. In such an embodiment, the service provider 110 may return only an indication of the successful validation of the credentials. If the mapping is performed by the service provider 110, then, in step 616, the service provider 110 may return the corresponding RCA to the payment network 108.

In step 618, the payment network 108 may route the authorization request with the RCA in place of the MCA to the issuer 112. In step 620, the issuer 112 may approve and process the financial transaction using methods apparent to persons having skill in the relevant art. In embodiments where the service provider 110 does not generate and map an MCA, the authorization response routed to the issuer 112 may include the MCA, and step 620 may further include identifying the RCA corresponding to the MCA. In step 622, the issuer 112 may submit a response to the payment network 108 approving the financial transaction.

In step 624, the payment network 108 may replace the RCA included in the authorization response with the corresponding MCA. In some embodiments, replacing the RCA may include step 626, where the service provider 110 may remap the RCA to the corresponding MCA and transmit the MCA to the payment network 108. The payment network 108 may transmit the authorization response including the MCA to the acquirer 106, who may then forward the authorization response to the contactless terminal 104 for finalization of the transaction.

### Provisioning of Mobile Cloud Account Data to the Mobile Device

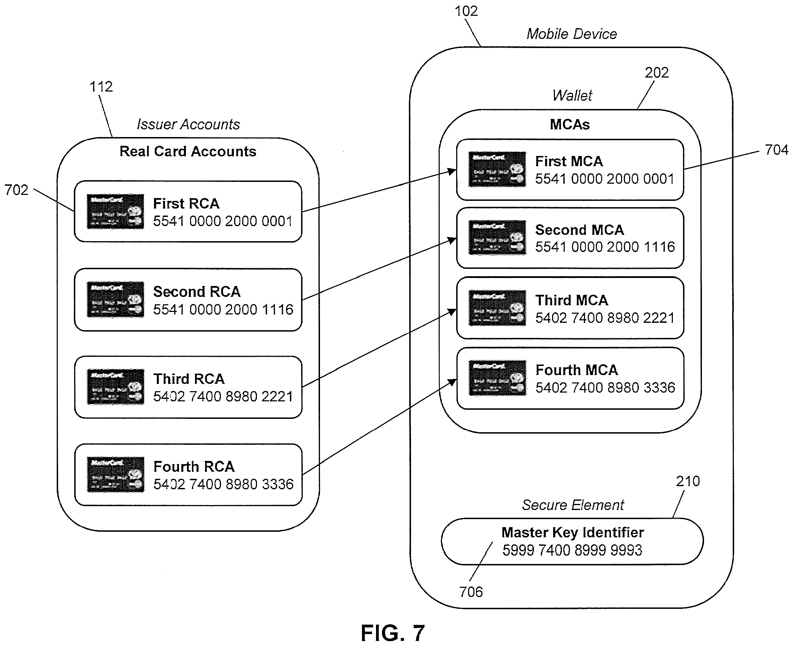

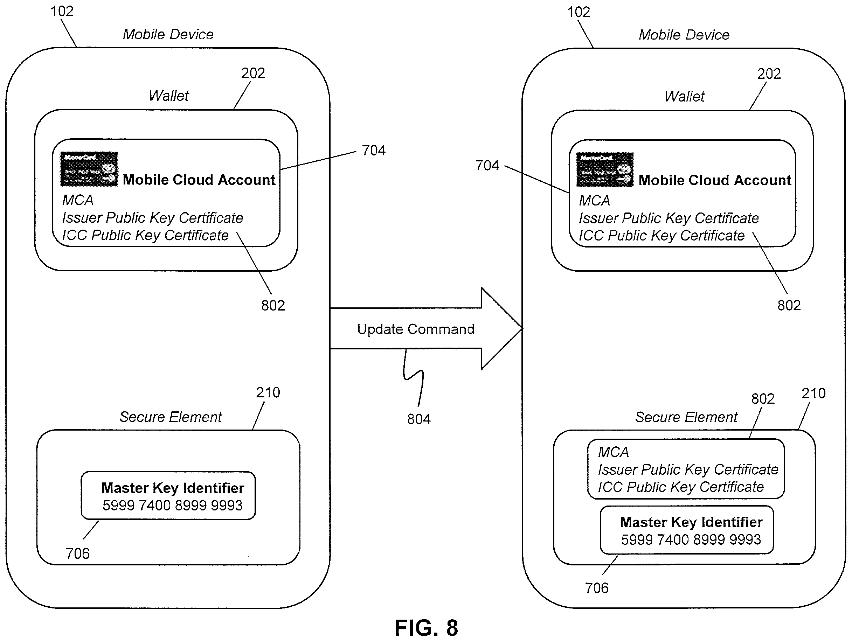

FIGS. 7 and 8 illustrate the provisioning of mobile cloud account data to the mobile device 102 and subsequently into the secure element 210 for transmission to the contactless terminal 104 for use in funding a contactless payment transaction.

As illustrated in FIG. 7, the issuer 112 may issue a plurality of real card accounts 702 to the user 302. Each real card account may include an RCA corresponding to the account. Using methods disclosed herein and discussed in more detail below, the service provider 110 may identify and/or generate an MCA to correspond to each RCA. The MCA may be included in a mobile cloud account 704 provisioned to the wallet 202 of the mobile device 102. The wallet 202 may store the mobile cloud account 704 and related data (e.g., MCA, post issuance scripts, etc.) for selection by the user 302 for use in a contactless payment transaction.

The mobile device 102 may also include the secure element 210. The secure element 210 may include the master key identifier 706 stored in a first portion of the secure element 210.

As illustrated in FIG. 8, each mobile cloud account 704 may include mobile cloud account data 802, such as the MCA, an issuer public key certificate, and ICC public key certificate, discussed in more detail below. When the user 302 indicates a particular mobile cloud account 704 for use in funding a payment transaction, the mobile device 102 may execute the corresponding post issuance script. The post issuance script may cause the mobile device 102 to execute an update command 804. The update command 804 may cause the mobile device 102 to transmit the mobile cloud account data 802 to the secure element 210.

The mobile cloud account data 802 may be stored in the secure element 210 in a second portion of the secure element 210 separate from the master key identifier 706, such as the mobile cardlet. The storage of the mobile cloud account data 802 in a separate portion of the secure element 210 may provide for additional security to prevent misappropriation or unauthorized access to the master key identifier 706 or other information. It will be apparent to persons having skill in the relevant art that the data included in the mobile cloud account data 802 as illustrated in FIG. 8 is provided as an illustration, and that the mobile cloud account data 802 may include different data or information.

### Generation and Mapping of Mobile Cloud Account Numbers and Data

FIG. 9 is a process flow illustrating a detailed method for the generation of mapping and cryptography data for a mobile cloud account.

In step 902, the service provider 110 may generate (e.g., create) an integrated circuit card (ICC) RSA key pair, which may include an ICC public key and an ICC private key. Methods for generating key pairs using RSA will be apparent to persons having skill in the relevant art. In step 904, the service provider 110 may create ICC master keys, such as an ICC master data encryption service (DES) key, based on the master key identifier sequence number and master key identifier domain issuer master keys.

In step 906, the service provider 110 may create personalization data. The personalization data may include data personalized to a specific user 302 and/or mobile device 102. In an exemplary embodiment, the personalized data may include at least an ICC DES master key, the ICC private key, the ICC public key and master key identifier and sequence number, and any additional information as applicable, such as card risk management information. In step 908, the personalization data may be transmitted to the mobile device 102 for storage in the secure element (e.g., in the mobile cardlet). In embodiments where the secure element does not already include the mobile cardlet (e.g., such as during OTA processing), step 906 may further include creating the mobile cardlet for installation in the secure storage 210 in step 908.

In step 910, the mobile device 102 may transmit the mobile key identifier and ICC public key stored in the secure element 210 to the service provider 110. In step 912, the issuer 112 may send the RCA to which an MCA is requested to the service provider 110. It will be apparent to persons having skill in the relevant art that steps 910 and 912 may be performed concurrently, in an alternate order, or at varying points in time. It will be further apparent to persons having skill in the relevant art that step 910 may be optional, as the service provider 110 may retain the mobile key identifier and ICC public key utilized and/or created in previous steps. In some embodiments, step 912 may occur prior to step 902 such that step 902 is triggered by the receipt of the RCA for the identification and mapping of a corresponding MCA.

In step 914, the service provider 110 may generate an MCA corresponding to the RCA. The MCA may be generated to include one or more attributes of the RCA. In one embodiment, the MCA may include one or more attributes of the RCA including at least one of: brand, product, country code, region, account level management participation, and Durbin indicator. In some embodiments, the MCA may include at least a portion of the RCA. In a further embodiment, the portion may be at least the last four digits of the RCA. In such an embodiment, the payment Ul 204 may display the mobile cloud account for the MCA to the user 302 in the form of an image of a payment card with first twelve digits of the MCA obscured (e.g., replaced by asterisks) and the last four digits displayed, such that the user 302 may readily recognize which MCA corresponds to which RCA based on the last four digits. It will be apparent to persons having skill in the relevant art that other indicators may be used, such as a similar graphical image (e.g., a graphical representation of a physical payment card), a nickname or other notation provided by the user 302, etc.

In some embodiments, the MCA may be identified such that there is a 1:1 relationship between an RCA account range and an MCA account range. In a further embodiment, an MCA account range may correspond to a particular issuer 112. In an exemplary embodiment, the first digit of the identified MCA may be zero, which may indicate that the MCA corresponds to an RCA (e.g., for routing by a payment network 108). In some embodiments, multiple MCAs may be mapped to correspond to a single RCA, such as in an instance where multiple payment cards may be issued for a single RCA (e.g., family cards, corporate cards, etc.).

In step 916, the service provider 110 may create an ICC public key certificate. In some embodiments, the ICC public key certificate may be created by the certification of the ICC public key by an issuer private key received from the issuer 112. In a further embodiment, the ICC public key may be received by the service provider 110 from the secure element 210 of the mobile device 102. In step 918, the issuer 112 may transmit an issuer public key certificate to the service provider 110.

In step 920, the service provider 110 may generate mobile cloud account data 802 corresponding to the generated MCA. The mobile cloud account data 802 may include at least the issuer public key certificate, the ICC public key certificate, and the MCA. In some embodiments, the generated MCA may include an expiration date, which may be further included in the mobile cloud account data 802. In one embodiment, the mobile cloud account data 802 may further include static track data and initialization vectors.

In step 922, the service provider 110 may generate a post issuance script configured to transmit the mobile cloud account data 802 from the wallet 202 of the mobile device 102 to the mobile cardlet in the secure storage 210. The service provider 110 may transmit the post issuance script to the mobile device 102, which may, in step 924, receive and store the post issuance script in the wallet 202. In step 926, the service provider 110 may save a mapping record for the generated MCA in the mapping database 116. The mapping record may include at least the master key identifier 706, the MCA, and the RCA.

### Exemplary Method for Mapping a Payment Account to a Mobile Cloud Account Number

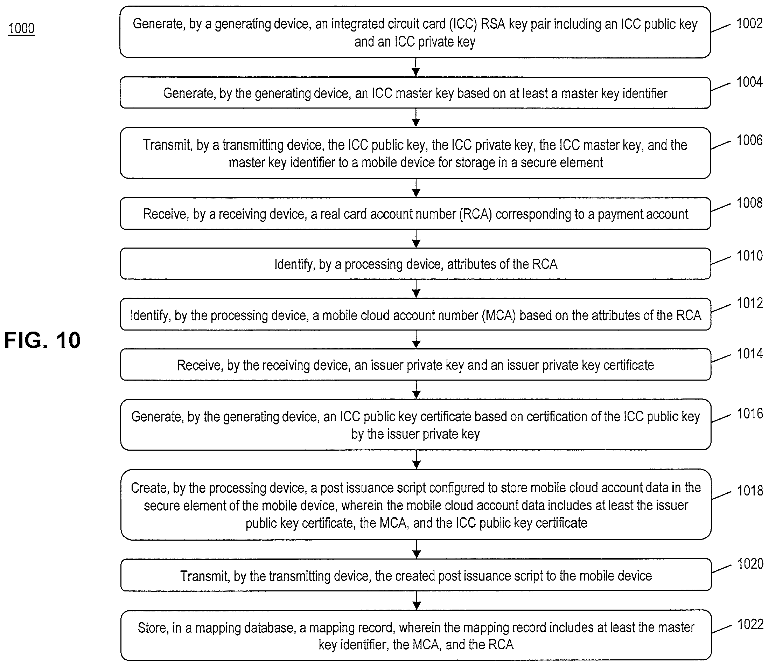

FIG. 10 illustrates a method 1000 for mapping a payment account (e.g., the real card account 702) to a mobile cloud account number.

In step 1002, an integrated circuit card (ICC) RSA key pair including an ICC public key and an ICC private key may be generated by a generating device (e.g., included in the service provider 110). In step 1004, the generating device may generate an ICC master key based on at least a master key identifier (e.g., the master key identifier 706). In one embodiment, the master key identifier may be a sixteen or nineteen digit number.

In step 1006, a transmitting device may transmit at least the ICC public key, the ICC private key, the ICC master key, and the master key identifier to a mobile device (e.g., the mobile device 102) for storage in a secure element (e.g., the secure element 210). In step 1008, a receiving device may receive a real card account number (RCA) corresponding to a payment account 702.

In step 1010, attributes of the RCA may be identified by a processing device. In one embodiment, the attributes of the RCA may include at least one of: a brand, product, country code, region, account level management participation, and Durbin indicator. In step 1012, the processing device may identify a mobile cloud account number (MCA) based on the identified attributes of the RCA. In one embodiment, identifying the MCA may include receiving, by the receiving device, the MCA from an issuer (e.g., the issuer 112) associated with the RCA. In some embodiments the identified MCA may include at least a portion of the RCA. In a further embodiment, the portion of the RCA may include at least the last four digits.

In step 1014, the receiving device may receive an issuer private key and an issuer private key certificate. In step 1016, the generating device may generate an ICC public key certificated based on certification of the ICC public key by the issuer private key. In step 1018, the processing device may create a post issuance script configured to store mobile cloud account data (e.g., the mobile cloud account data 802) in the secure element 210 of the mobile device 102, wherein the mobile cloud account data 802 includes at least the issuer public key certificate, the MCA, and the ICC public key certificate.

In step 1020, the transmitting device may transmit the created post issuance script to the mobile device 102. In step 1022, a mapping record may be stored in a mapping database (e.g., the mapping database 116), wherein the mapping record includes at least the master key identifier 706, the MCA, and the RCA.

### Exemplary Method for Processing a Financial Transaction

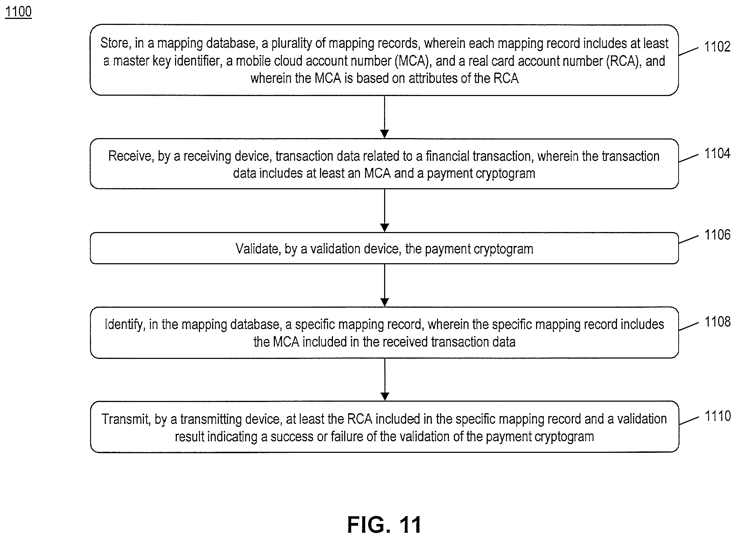

FIG. 11 illustrates a method 1100 for processing a contactless financial transaction using a mobile cloud account.

In step 1102, a plurality of mapping records may be stored in a mapping database (e.g., the mapping database 116), wherein each mapping record includes at least a master key identifier (e.g., the master key identifier 706), a mobile cloud account number (MCA), and a real card account number (RCA), and wherein the MCA is based on attributes of the RCA. In one embodiment the MCA may include at least a portion of the RCA. In a further embodiment, the portion of the RCA may include at least the last four digits of the RCA. In some embodiments, the attributes of the RCA may include at least one of: a brand, product, country code, region, account level management participation, and Durbin indicator. In one embodiment, the master key identifier 706 may be a sixteen or nineteen digit number.

In step 1104, a receiving device may receive transaction data related to a financial transaction, wherein the transaction data may include at least an MCA and a payment cryptogram. In one embodiment, the received transaction data may be included in an authorization request for the financial transaction. In some embodiments, the payment cryptogram may be one of: a dynamic card validation code and an authorization request cryptogram. In step 1106, a validation device may validate the payment cryptogram.

In step 1108, a specific mapping record may be identified in the mapping database 116, wherein the specific mapping record includes the MCA included in the received transaction data. In step 1110, a transmitting device may transmit at least the RCA included in the specific mapping record and a validation result indicating a success or failure of the validation of the payment cryptogram.

In embodiments where the transaction data may be included in an authorization request, the method 1100 may further comprise: receiving, by the receiving device, an authorization response from an issuer (e.g., the issuer 112) associated with the RCA, the authorization response including at least the RCA included in the specific mapping record and an indication of approval or denial of the financial transaction; and transmitting, by the transmitting device, an authorization response including the MCA included in the specific mapping record in response to the authorization request.

### Exemplary Method for Providing Payment Credentials for a Financial Transaction

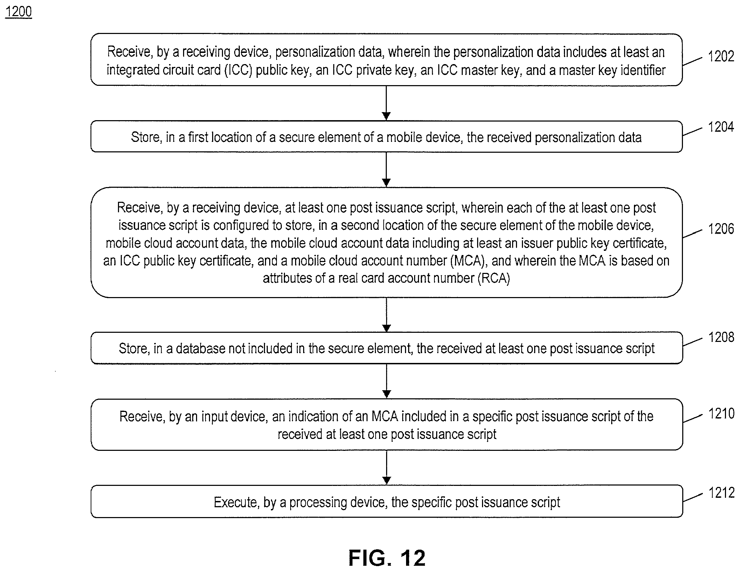

FIG. 12 illustrates a method 1200 for providing payment credentials for a mobile cloud account from a mobile device for a contactless payment transaction.

In step 1202, personalization data may be received by a receiving device, wherein the personalization data includes at least an integrated circuit card (ICC) public key, an ICC private key, an ICC master key, and a master key identifier (e.g., the master key identifier 706). In step 1204, the received personalization data may be stored in a first location of a secure element (e.g., the secure element 210) of a mobile device (e.g., the mobile device 102).

In step 1206, at least one post issuance script may be received by a receiving device, wherein each of the at least one post issuance script is configured to store, in a second location of the secure element 210 of the mobile device 102, mobile cloud account data (e.g., the mobile cloud account data 802), the mobile cloud account data 802 including at least an issuer public key certificate, an ICC public key certificate, and a mobile cloud account number (MCA), and wherein the MCA is based on attributes of a real card account number (RCA). In one embodiment, the MCA may include at least a portion of the RCA. In a further embodiment, the portion of the RCA may include at least the last four digits of the RCA. In some embodiments, the attributes of the RCA may include at least one of: a brand, product, country code, region, account level management participation, and Durbin indicator. In one embodiment, the master key identifier 706 is a sixteen or nineteen digit number.

In step 1208, the received at least one post issuance script may be stored in a database (e.g., the wallet 202) not included in the secure element 210. In step 1210, an indication of an MCA included in a specific post issuance script of the at least one post issuance script may be received by an input device. In one embodiment the input device may include at least one of: a mouse, keyboard, click wheel, scroll wheel, and touch screen. In step 1212, the specific post issuance script may be executed by a processing device.

In one embodiment, the method 1200 may further include: generating, by a generating device, a payment cryptogram based on at least a portion of the mobile cloud account data 802; and transmitting, via near field communication, at least the generated payment cryptogram and the indicated MCA. In a further embodiment, the payment cryptogram may be one of: a dynamic card validation code and an authorization request cryptogram.

### Computer System Architecture

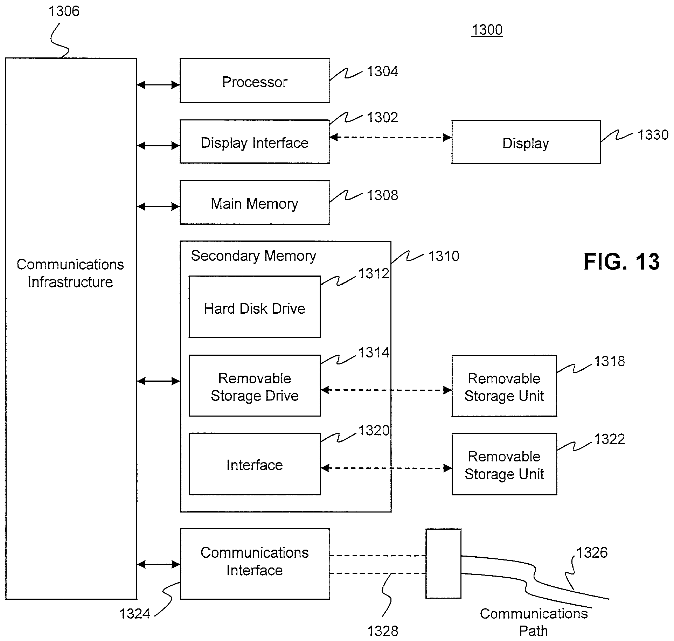

FIG. 13 illustrates a computer system 1300 in which embodiments of the present disclosure, or portions thereof, may be implemented as computer-readable code. For example, mobile device 102, the contactless terminal 104, the acquirer 106, the payment network 108, the service provider 110, the issuer 112, and the clearing service 114 of FIG. 1 may be implemented in the computer system 1300 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 3-7 and 9-12.

If programmable logic is used, such logic may execute on a commercially available processing platform or a special purpose device. A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 1318, a removable storage unit 1322, and a hard disk installed in hard disk drive 1312.

Various embodiments of the present disclosure are described in terms of this example computer system 1300. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 1304 may be a special purpose or a general purpose processor device. The processor device 1304 may be connected to a communication infrastructure 1306, such as a bus, message queue, network, multi-core message-passing scheme, etc. The network may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 1300 may also include a main memory 1308 (e.g., random access memory, read-only memory, etc.), and may also include a secondary memory 1310. The secondary memory 1310 may include the hard disk drive 1312 and a removable storage drive 1314, such as a floppy disk drive, a magnetic tape drive, an optical disk drive, a flash memory, etc.

The removable storage drive 1314 may read from and/or write to the removable storage unit 1318 in a well-known manner. The removable storage unit 1318 may include a removable storage media that may be read by and written to by the removable storage drive 1314. For example, if the removable storage drive 1314 is a floppy disk drive, the removable storage unit 1318 may be a floppy disk. In one embodiment, the removable storage unit 1318 may be non-transitory computer readable recording media.

In some embodiments, the secondary memory 1310 may include alternative means for allowing computer programs or other instructions to be loaded into the computer system 1300, for example, the removable storage unit 1322 and an interface 1320. Examples of such means may include a program cartridge and cartridge interface (e.g., as found in video game systems), a removable memory chip (e.g., EEPROM, PROM, etc.) and associated socket, and other removable storage units 1322 and interfaces 1320 as will be apparent to persons having skill in the relevant art.

Data stored in the computer system 1300 (e.g., in the main memory 1308 and/or the secondary memory 1310) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 1300 may also include a communications interface 1324. The communications interface 1324 may be configured to allow software and data to be transferred between the computer system 1300 and external devices. Exemplary communications interfaces 1324 may include a modem, a network interface (e.g., an Ethernet card), a communications port, a PCMCIA slot and card, etc. Software and data transferred via the communications interface 1324 may be in the form of signals, which may be electronic, electromagnetic, optical, or other signals as will be apparent to persons having skill in the relevant art. The signals may travel via a communications path 1326, which may be configured to carry the signals and may be implemented using wire, cable, fiber optics, a phone line, a cellular phone link, a radio frequency link, etc.

Computer program medium and computer usable medium may refer to memories, such as the main memory 1308 and secondary memory 1310, which may be memory semiconductors (e.g. DRAMs, etc.). These computer program products may be means for providing software to the computer system 1300. Computer programs (e.g., computer control logic) may be stored in the main memory 1308 and/or the secondary memory 1310. Computer programs may also be received via the communications interface 1324. Such computer programs, when executed, may enable computer system 1300 to implement the present methods as discussed herein. In particular, the computer programs, when executed, may enable processor device 1304 to implement the methods illustrated by FIGS. 3-7 and 9-12, as discussed herein. Accordingly, such computer programs may represent controllers of the computer system 1300. Where the present disclosure is implemented using software, the software may be stored in a computer program product and loaded into the computer system 1300 using the removable storage drive 1314, interface 1320, and hard disk drive 1312, or communications interface 1324.

Techniques consistent with the present disclosure provide, among other features, systems and methods for mapping mobile cloud accounts to payment accounts and the processing of financial transactions funded thereof. While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope.

## Claims

1. A method for mapping a payment account to a mobile cloud account number comprising:
generating, by a generating device of a service provider, an integrated circuit card (ICC) RSA key pair including an ICC public key and an ICC private key;
generating, by the generating device of the service provider, an ICC master key based on at least a master key identifier;
transmitting, by a transmitting device of the service provider, the ICC public key, the ICC private key, the ICC master key, and the master key identifier to a mobile device for storage in a secure element;
receiving, by a receiving device of the service provider, a real card account number (RCA) corresponding to a payment account;
identifying, by a processing device of the service provider, attributes of the RCA;
identifying, by the processing device of the service provider, a mobile cloud account number (MCA) based on the attributes of the RCA;
receiving, by the receiving device of the service provider, an issuer private key, an issuer private key certificate and an issuer public key certificate;
generating, by the generating device of the service provider, an ICC public key certificate based on certification of the ICC public key by the issuer private key;
creating, by the processing device of the service provider, a post issuance script configured to store mobile cloud account data in the secure element of the mobile device, wherein the mobile cloud account data includes at least the issuer public key certificate, the MCA, and the ICC public key certificate;
transmitting, by the transmitting device, of the service provider, the created post issuance script to the mobile device; and
storing, in a mapping database, of the service provider, a mapping record, wherein the mapping record includes at least the master key identifier, the MCA, and the RCA.

2. The method of claim 1, wherein identifying a MCA based on the attributes of the RCA includes receiving, by the receiving device, of the service provider, the MCA from the issuer.

3. The method of claim 1, wherein the attributes of the RCA include at least one of: a brand, product, country code, region, account level management participation, and Durbin indicator.

4. The method of claim 1, further comprising:
storing, in the mapping database, of the service provider, a plurality of mapping records, wherein each mapping record includes at least a master key identifier, a mobile cloud account number (MCA), and a real card account number (RCA), and wherein the MCA is based on attributes of the RCA;
receiving, by the receiving device, of the service provider, transaction data related to a financial transaction, wherein the transaction data includes at least an MCA and a payment cryptogram;
validating, by a validation device, of the service provider, the payment cryptogram;
identifying, in the mapping database, of the service provider, a specific mapping record, wherein the specific mapping record includes the MCA included in the received transaction data; and
transmitting, by the transmitting device, at least the RCA included in the specific mapping record and a validation result indicating a success or failure of the validation of the payment cryptogram.

5. The method of claim 4, further comprising:
receiving, by the receiving device, of the service provider, an authorization response from an issuer associated with the RCA, wherein the authorization response includes at least the RCA included in the specific mapping record and an indication of approval or denial of the financial transaction; and
transmitting, by the transmitting device, of the service provider, an authorization response including the MCA included in the specific mapping record in response to an authorization request.

6. The method of claim 4, wherein the payment cryptogram is one of: a dynamic card validation code and an authorization request cryptogram.

7. A system for mapping a payment account to a mobile cloud account number comprising:
a mapping database of a service provider;
a generating device, of the service provider, configured to generate an integrated circuit card (ICC) RSA key pair including an ICC public key and an ICC private key, and an ICC master key based on at least a master key identifier;
a transmitting device, of the service provider, configured to transmit the ICC public key, the ICC private key, the ICC master key, and the master key identifier to a mobile device for storage in a secure element of the mobile device;
a receiving device, of the service provider, configured to receive a real card account number (RCA) corresponding to a payment account; and
a processing device, of the service provider, configured to identify attributes of the RCA and identify a mobile cloud account number (MCA) based on the attributes of the RCA, wherein
the receiving device, of the service provider, is further configured to receive an issuer private key, an issuer private key certificate and an issuer public key certificate,
the generating device, of the service provider, is further configured to generate an ICC public key certificate based on certification of the ICC public key by the issuer private key,
the processing device, of the service provider, is further configured to create a post issuance script configured to store mobile cloud account data in the secure element of the mobile device, the mobile cloud account data including at least the issuer public key certificate, the MCA, and the ICC public key certificate,
the transmitting device, of the service provider, is further configured to transmit the created post issuance script to the mobile device, and
the mapping database, of the service provider, is configured to store a mapping record,
wherein the mapping record includes at least the master key identifier, the MCA, and the RCA.

8. The system of claim 7, further comprising:
a validation device, of the service provider, wherein
the mapping database, of the service provider, is further configured to store a plurality of mapping records, wherein each mapping record includes at least a master key identifier, a mobile cloud account number (MCA), and a real card account number (RCA), and wherein the MCA is based on attributes of the RCA; and
the receiving device, of the service provider, is further configured to receive transaction data related to a financial transaction, wherein the transaction data includes at least an MCA and a payment cryptogram,
the validation device, of the service provider, is configured to validate the payment cryptogram;
the processing device, of the service provider, is further configured to identify, in the mapping database, a specific mapping record, wherein the specific mapping record includes the MCA included in the received transaction data; and
the transmitting device, of the service provider, is further configured to transmit at least the RCA included in the specific mapping record and a validation result indicating a success or failure of the validation of the payment cryptogram.

9. The system of claim 8, wherein
the receiving device, of the service provider, is further configured to receive an authorization response from an issuer associated with the RCA, the authorization response including at least the RCA included in the specific mapping record and an indication of approval or denial of the financial transaction, and
the transmitting device, of the service provider, is further configured to transmit an authorization response including the MCA included in the specific mapping record in response to an authorization request.

10. A mobile device for providing payment credentials for a financial transaction comprising:
an input device;
a secure element;
a database not included in the secure element;
a receiving device configured to receive personalization data, wherein the personalization data includes at least an integrated circuit card (ICC) public key, an ICC private key, an ICC master key, and a master key identifier; and
a processing device configured to store, in a first location of the secure element, the received personalization data, wherein
the receiving device is further configured to receive at least one post issuance script, each of the at least one post issuance script configured to cause the processing device to store, in a second location of the secure element, mobile cloud account data including at least an issuer public key certificate, an ICC public key certificate, based on certification of the ICC public key by an issuer private key, and a mobile cloud account number (MCA),
the processing device is further configured to store the received at least one post issuance script in the database,
the input device is configured to receive an indication of an MCA included in a specific post issuance script of the received at least one post issuance script,
the processing device is further configured to execute the specific post issuance script, and
the MCA is based on the attributes of a real card account number (RCA).

11. The mobile device of claim 10, further comprising:
a generating device configured to generate a payment cryptogram based on at least a portion of the mobile cloud account data, wherein
the transmitting device is further configured to transmit, via near field communication, at least the generated payment cryptogram and the indicated MCA.

12. A non-transitory computer readable recording medium having program instructions stored therein that causes a processor of a mobile computing device to :
receive personalization data, wherein the personalization data includes at least an integrated circuit card (ICC) public key, an ICC private key, an ICC master key, and a master key identifier;
store, in a first location of a secure element, the received personalization data;
receive at least one post issuance script, wherein each of the at least one post issuance script is configured to store, in a second location of the secure element, mobile cloud account data, the mobile cloud account data including at least an issuer public key certificate, an ICC public key certificate based on certification of the ICCpublic key by an issuer private key, and a mobile cloud account number (MCA);
store, in a database not included in the secure element, the received at least one post issuance script;
receive an indication of an MCA included in a specific post issuance script of the received at least one post issuance script; and
execute the specific post issuance script,
wherein the MCA is based on attributes of a real card account number (RCA).

## Patentansprüche

1. Verfahren zur Zuordnung eines Zahlungskontos zu einer Mobilcloud-Kontonummer umfassend:
Erzeugen eines RSA-Schlüsselpaars für eine Integrated Circuit Card (Abk. ICC, dt. Chipkarte) durch ein Erzeugungsgerät eines Dienstanbieters, das einen öffentlichen ICC-Schlüssel und einen privaten ICC-Schlüssel aufweist;
Erzeugen eines ICC-Hauptschlüssels, der auf mindestens einem Hauptschlüsselbezeichner basiert, durch ein Erzeugungsgerät eines Dienstanbieters;
Übertragen des öffentlichen ICC-Schlüssels, des privaten ICC-Schlüssels, des ICC-Hauptschlüssels und des Hauptschlüsselbezeichners durch ein Übertragungsgerät des Dienstanbieters an ein Mobilgerät zur Speicherung in einem sicheren Element;
Empfangen einer richtigen Kartenkontonummer (RCA), die einem Zahlungskonto entspricht, durch ein Empfangsgerät des Dienstanbieters;
Identifizieren von Attributen der RCA durch ein Verarbeitungsgerät des Dienstanbieters;
Identifizieren einer Mobilcloud-Kontonummer (MCA) durch das Verarbeitungsgerät des Dienstanbieters basierend auf den Attributen der RCA;
Empfangen eines privaten Schlüssels des Ausstellers, eines Zertifikats des privaten Schlüssels des Ausstellers und eines Zertifikats des öffentlichen Schlüssels des Ausstellers durch das Empfangsgerät des Dienstanbieters;
Erzeugen eines öffentlichen ICC-Schlüsselzertifikats durch das Erzeugungsgerät des Dienstanbieters basierend auf der Zertifizierung des öffentlichen ICC-Schlüssels durch den privaten Schlüssel des Ausstellers;
Erstellen eines Skripts nach erfolgter Ausgabe durch das Verarbeitungsgerät des Dienstanbieters, das zum Speichern von Mobilcloud-Kontodaten in dem sicheren Element des Mobilgeräts konfiguriert ist, wobei die Mobilcloud-Kontodaten mindestens das Zertifikat des privaten Schlüssels des Ausstellers, die MCA und das öffentliche ICC-Schlüsselzertifikat aufweisen;
Übertragen des erstellten Skripts nach erfolgter Ausgabe durch das Übertragungsgerät des Dienstanbieters an das Mobilgerät; und
Speichern eines Zuordnungsdatensatzes in einer Zuordnungsdatenbank des Dienstanbieters, wobei der Zuordnungsdatensatz mindestens den Hauptschlüsselbezeichner, die MCA und die RCA aufweist.

2. Verfahren nach Anspruch 1, wobei das Identifizieren einer MCA basierend auf den Attributen der RCA das Empfangen der MCA vom Aussteller durch das Empfangsgerät des Dienstanbieters umfasst.

3. Verfahren nach Anspruch 1, wobei die Attribute der RCA mindestens eines der folgenden aufweisen: Marke, Produkt, Ländercode, Region, Kontoebene-Management-Partizipation und Durbin-Indikator.

4. Verfahren nach Anspruch 1, ferner umfassend:
Speichern von mehreren Zuordnungsdatensätzen in einer Zuordnungsdatenbank des Dienstanbieters, wobei jeder Zuordnungsdatensatz mindestens einen Hauptschlüsselbezeichner, eine Mobilcloud-Kontonummer (MCA) und eine richtige Kartenkontonummer (RCA) aufweist und wobei die MCA auf Attributen der RCA basiert;
Empfangen von Transaktionsdaten im Zusammenhang mit einer Finanztransaktion durch das Empfangsgerät des Dienstanbieters, wobei die Transaktionsdaten mindestens eine MCA und ein Zahlungskryptogramm aufweisen;
Validierung des Zahlungskryptogramms durch ein Validierungsgerät des Dienstanbieters;
Identifizieren eines bestimmten Zuordnungsdatensatzes in der Zuordnungsdatenbank des Dienstanbieters, wobei der spezifische Zuordnungsdatensatz die in den empfangenen Transaktionsdaten enthaltene MCA enthält; und
Übertragen von mindestens der in dem spezifischen Zuordnungsdatensatz enthaltenen RCA und einem Validierungsergebnis, das einen Erfolg oder Misserfolg der Validierung des Zahlungskryptogramms durch das Übertragungsgerät anzeigt.

5. Verfahren nach Anspruch 4, ferner umfassend:
Empfangen einer Autorisierungsantwort von einem mit der RCA verbundenen Aussteller durch das Empfangsgerät des Dienstanbieters, wobei die Autorisierungsantwort mindestens die in dem spezifischen Zuordnungsdatensatz enthaltene RCA und eine Angabe der Genehmigung oder Ablehnung der Finanztransaktion aufweist; und
Übertragen einer Autorisierungsantwort einschließlich der MCA, die in dem spezifischen Zuordnungsdatensatz enthalten ist, durch das Übertragungsgerät des Dienstanbieters als Antwort auf eine Autorisierungsanforderung.

6. Verfahren nach Anspruch 4, wobei das Zahlungskryptogramm eines der folgenden ist: ein dynamischer Kartenvalidierungscode und ein Autorisierungsanforderungskryptogramm.

7. System zur Zuordnung eines Zahlungskontos zu einer Mobilcloud-Kontonummer umfassend:
eine Zuordnungsdatenbank eines Dienstanbieters;
ein Erzeugungsgerät des Dienstanbieters, das konfiguriert ist, um ein RSA-Schlüsselpaar für eine Integrated Circuit Card (ICC) zu erzeugen, das einen öffentlichen ICC-Schlüssel und einen privaten ICC-Schlüssel sowie einen ICC-Hauptschlüssel basierend auf mindestens einem Hauptschlüsselbezeichner aufweist;
ein Übertragungsgerät des Dienstanbieters, das konfiguriert ist, um den öffentlichen ICC-Schlüssel, den privaten ICC-Schlüssels, den ICC-Hauptschlüssel und den Hauptschlüsselbezeichner an ein Mobilgerät zur Speicherung in einem sicheren Element des Mobilgeräts zu übertragen;
ein Empfangsgerät des Dienstanbieters, das konfiguriert ist, um eine richtige Kartenkontonummer (RCA) zu empfangen, die einem Zahlungskonto entspricht; und
ein Verarbeitungsgerät des Dienstanbieters, das konfiguriert ist, um Attribute der RCA zu identifizieren und eine Mobilcloud-Kontonummer (MCA) basierend auf den Attributen der RCA zu identifizieren, wobei
das Empfangsgerät des Dienstanbieters ferner konfiguriert ist, um einen privaten Schlüssels des Ausstellers, ein Zertifikat des privaten Schlüssels des Ausstellers und ein Zertifikats des öffentlichen Schlüssels des Ausstellers zu empfangen,
das Erzeugungsgerät des Dienstanbieters ferner konfiguriert ist, um ein öffentliches ICC-Schlüsselzertifikat basierend auf der Zertifizierung des öffentlichen ICC-Schlüssels durch den privaten Schlüssel des Ausstellers zu erzeugen,
das Verarbeitungsgerät des Dienstanbieters ferner konfiguriert ist, um ein Skript nach erfolgter Ausgabe zu erzeugen, das konfiguriert ist, um Mobilcloud-Kontodaten in dem sicheren Element des Mobilgeräts zu speichern, wobei die Mobilcloud-Kontodaten mindestens das Zertifikat des öffentlichen Schlüssels des Ausstellers, die MCA und das öffentliche ICC-Schlüsselzertifikat aufweisen,
das Übertragungsgerät des Dienstanbieters ferner konfiguriert ist, um das erstellte Skript nach erfolgter Ausgabe an das Mobilgerät zu übertragen, und
die Zuordnungsdatenbank des Dienstanbieter konfiguriert ist, um einen Zuordnungsdatensatz zu speichern,
wobei der Zuordnungsdatensatz mindestens den Hauptschlüsselbezeichner, die MCA und die RCA aufweist.

8. System nach Anspruch 7, ferner umfassend:
ein Validierungsgerät des Dienstanbieters, wobei
die Zuordnungsdatenbank des Dienstanbieters ferner konfiguriert ist, um mehrere Zuordnungsdatensätze zu speichern, wobei jeder Zuordnungsdatensatz mindestens einen Hauptschlüsselbezeichner, eine Mobilcloud-Kontonummer (MCA) und eine richtige Kartenkontonummer (RCA) aufweist, und wobei die MCA auf Attributen der RCA basiert; und
das Empfangsgerät des Dienstanbieters ferner konfiguriert ist, um Transaktionsdaten im Zusammenhang mit einer Finanztransaktion zu empfangen, wobei die Transaktionsdaten mindestens eine MCA und ein Zahlungskryptogramm aufweisen;
das Validierungsgerät des Dienstanbieters konfiguriert ist, um das Zahlungskryptogramm zu validieren;
das Verarbeitungsgerät des Dienstanbieters ferner konfiguriert ist, um einen spezifischen Zuordnungsdatensatz in der Zuordnungsdatenbank zu identifizieren, wobei der spezifische Zuordnungsdatensatz die in den empfangenen Transaktionsdaten enthaltene MCA aufweist; und
das Übertragungsgerät des Dienstanbieters ferner konfiguriert ist, um mindestens die in dem spezifischen Zuordnungsdatensatz enthaltene RCA und ein Validierungsergebnis, das einen Erfolg oder Misserfolg der Validierung des Zahlungskryptogramms anzeigt, zu übertragen.

9. System nach Anspruch 8, wobei
das Empfangsgerät des Dienstanbieters ferner konfiguriert ist, um eine Autorisierungsantwort von einem mit der RCA verbundenen Aussteller zu empfangen, wobei die Autorisierungsantwort mindestens die in dem spezifischen Zuordnungsdatensatz enthaltene RCA und eine Angabe der Genehmigung oder Ablehnung der Finanztransaktion aufweist; und
das Übertragungsgerät des Dienstanbieters ferner konfiguriert ist, um eine Autorisierungsantwort einschließlich der MCA, die in dem spezifischen Zuordnungsdatensatz enthalten ist, als Antwort auf eine Autorisierungsanforderung zu übertragen.

10. Mobilgerät zur Bereitstellung von Zahlungslegitimationen für eine Finanztransaktion, umfassend:
ein Eingabegerät;
ein sicheres Element;
eine Datenbank, die nicht im sicheren Element enthalten ist;
ein Empfangsgerät, das konfiguriert ist, um Personalisierungsdaten zu empfangen, wobei die Personalisierungsdaten mindestens einen öffentlichen (Integrated Circuit Card) ICC-Schlüssel, einen privaten ICC-Schlüssel, einen ICC-Hauptschlüssel und einen Hauptschlüsselbezeichner aufweisen; und
ein Verarbeitungsgerät, das konfiguriert ist, um an einem ersten Ort des sicheren Elements die empfangenen Personalisierungsdaten zu speichern, wobei
das Empfangsgerät ferner konfiguriert, um mindestens ein Skript nach erfolgter Ausgabe zu empfangen, wobei jedes von dem mindestens einen Skript nach erfolgter Ausgabe konfiguriert ist, um das Verarbeitungsgerät zu veranlassen, Mobilcloud-Kontodaten an einem zweiten Ort des sicheren Elements zu speichern, einschließlich mindestens eines Zertifikats des öffentlichen Schlüssels des Ausstellers, eines öffentlichen ICC-Schlüsselzertifikats basierend auf der Zertifizierung des öffentlichen ICC-Schlüssels durch einen privaten Schlüssel des Ausstellers und einer Mobilcloud-Kontonummer (MCA),
das Verarbeitungsgerät ferner konfiguriert, um das empfangene mindestens eine Skript nach erfolgter Ausgabe in der Datenbank zu speichern,
das Eingabegerät konfiguriert ist, um eine Angabe einer MCA zu empfangen, die in einem spezifischen Skript nach erfolgter Ausgabe des mindestens einen empfangenen Skripts nach erfolgter Ausgabe enthalten ist, wobei das Verarbeitungsgerät ferner konfiguriert ist, um das spezifische Skript nach erfolgter Ausgabe auszuführen, und
die MCA auf den Attributen einer richtigen Kartenkontonummer (RCA) basiert.

11. Mobilgerät nach Anspruch 10, ferner umfassend:
ein Erzeugungsgerät, das konfiguriert ist, um ein Zahlungskryptogramm basierend auf mindestens einem Abschnitt der Mobilcloud-Kontodaten zu erzeugen, wobei
das Übertragungsgerät ferner konfiguriert ist, um das mindestens eine erzeugte Zahlungskryptogramm und die angegebene MCA über Nahfeldkommunikation zu übertragen.

12. Ein nichtflüchtiges computerlesbares Aufzeichnungsmedium mit darin gespeicherten Programmanweisungen, das einen Prozessor eines mobilen Computergeräts veranlasst:
Personalisierungsdaten zu empfangen, wobei die Personalisierungsdaten mindestens einen öffentlichen (Integrated Circuit Card) ICC-Schlüssel, einen privaten ICC-Schlüssel, einen ICC-Hauptschlüssel und einen Hauptschlüsselbezeichner aufweisen;
empfangene Personalisierungsdaten an einem ersten Ort des sicheren Elements zu speichern;
mindestens ein Skript nach erfolgter Ausgabe zu empfangen, wobei jedes von dem mindestens einen Skript nach erfolgter Ausgabe konfiguriert ist, um die Mobilcloud-Kontodaten an einem zweiten Ort des sicheren Elements zu speichern, einschließlich mindestens eines Zertifikats des öffentlichen Schlüssels des Ausstellers, eines öffentlichen ICC-Schlüsselzertifikats basierend auf der Zertifizierung des öffentlichen ICC-Schlüssels durch einen privaten Schlüssel des Ausstellers und einer Mobilcloud-Kontonummer (MCA);
das empfangene mindestens eine Skript nach erfolgter Ausgabe in einer Datenbank, die nicht im sicheren Element enthalten ist, zu speichern;
eine Angabe einer MCA, die in einem spezifischen Skript nach erfolgter Ausgabe des empfangenen mindestens einen Skripts nach erfolgter Ausgabe enthalten ist, zu empfangen; und
das spezifische Skript nach erfolgter Ausgabe auszuführen,
wobei die MCA auf den Attributen einer richtigen Kartenkontonummer (RCA) basiert.

## Revendications

1. Procédé de mise en correspondance d'un compte de paiement avec un numéro de compte en nuage, comprenant :
la génération, par un dispositif de génération d'un fournisseur de services, d'une paire de clés RSA (ICC) de carte de circuit imprimé incluant une clé publique ICC et une clé privée ICC ;
génération, par le dispositif de génération du fournisseur de services, d'une clé maîtresse ICC en se basant sur au moins un identifiant de clé maîtresse ;
transmission, par un dispositif de transmission du fournisseur de services, de la clé publique ICC, de la clé privée ICC, de la clé maîtresse ICC, et de l'identifiant de clé maîtresse à un dispositif mobile pour stockage dans un élément sécurisé ;
réception, par un dispositif de réception du fournisseur de services, d'un numéro de compte de carte réelle (RCA) correspondant à un compte de paiement ;
identification, par un dispositif de traitement du fournisseur de services, d'attributs du RCA ;
identification, par le dispositif de traitement du fournisseur de services, d'un numéro de compte en nuage mobile (MCA) en se basant sur les attributs du RCA ;
réception, par le dispositif de réception du fournisseur de services, d'une clé privée d'éditeur, d'un certificat de clé privée d'éditeur et d'un certificat de clé publique d'éditeur ;
génération, par le dispositif de génération du fournisseur de services, d'un certificat de clé publique ICC en se basant sur la certification de la clé publique ICC par la clé privée d'éditeur ;
création, par le dispositif de traitement du fournisseur de services, d'un script d'édition de message conçu pour stocker des données de compte en nuage mobile dans l'élément sécurisé du dispositif mobile, les données de compte en nuage mobile incluant au moins le certificat de clé publique d'éditeur, le MCA, et le certificat de clé publique ICC ;
transmission, par le dispositif de transmission, du fournisseur de services, du script d'édition de messages créé au dispositif mobile ; et
stockage, dans une base de données de mise en correspondance du fournisseur de services, d'un enregistrement de mise en correspondance, l'enregistrement de mise en correspondance incluant au moins l'identifiant de clé maîtresse, le MCA, et le RCA.

2. Procédé selon la revendication 1, dans lequel l'identification d'un MCA en se basant sur les attributs du RCA inclut la réception, par le dispositif de réception du fournisseur de services, du MCA provenant de l'éditeur.

3. Procédé selon la revendication 1, dans lequel les attributs du RCA incluent au moins un parmi : une marque, un produit, un code de pays, une région, une participation à la gestion de niveau de compte, et un indicateur Durbin.

4. Procédé selon la revendication 1, comprenant en outre :
le stockage, dans la base de données du fournisseur de services, d'une pluralité d'enregistrements de mise en correspondance, chaque enregistrement de mise en correspondance incluant au moins un identifiant de clé maîtresse, un numéro de compte en nuage mobile (MCA), et un numéro de compte de carte réelle (RCA), et dans lequel le MCA est basé sur des attributs du RCA ;
la réception, par le dispositif de réception, des données de transaction de fournisseur de services relatives à une transaction financière, les données de transaction incluant au moins un MCA et un cryptogramme de paiement ;
la validation, par un dispositif de validation du fournisseur de services, du cryptogramme de paiement ;
l'identification, dans la base de données de mise en correspondance du fournisseur de services, d'un enregistrement de mise en correspondance spécifique, l'enregistrement de mise en correspondance spécifique incluant le MCA inclus dans les données de transaction reçues ; et
la transmission, par le dispositif de transmission, au moins du RCA inclus dans l'enregistrement de mise en correspondance spécifique et d'un résultat de validation indiquant une réussite ou un échec de la validation du cryptogramme de paiement.

5. Procédé selon la revendication 4, comprenant en outre :
la réception, par le dispositif de réception du fournisseur de services, d'une réponse d'autorisation de la part d'un éditeur associé au RCA, la réponse d'autorisation incluant au moins le RCA inclus dans l'enregistrement de mise en correspondance spécifique et une indication d'approbation ou de refus de la transaction financière ; et
la transmission, par le dispositif de transmission du fournisseur de services, d'une réponse d'autorisation incluant le MCA inclus dans l'enregistrement de mise en correspondance spécifique en réponse à une demande d'autorisation.

6. Procédé selon la revendication 4, dans lequel le cryptogramme de paiement est un parmi : un code de validation de carte dynamique et un cryptogramme de demande d'autorisation.

7. Système de mise en correspondance d'un compte de paiement avec un numéro de compte en nuage mobile, comprenant :
une base de données de mise en correspondance d'un fournisseur de services ;
un dispositif de génération du fournisseur de services conçu pour générer une carte une paire de clés RSA (ICC) de carte de circuit intégré incluant une clé publique ICC et une clé privée ICC, et une clé maîtresse ICC en se basant sur au moins un identifiant de clé maîtresse ;
un dispositif de transmission du fournisseur de services conçu pour transmettre la clé publique ICC, la clé privée ICC, la clé maîtresse ICC, et l'identifiant de clé maîtresse à un dispositif mobile pour stockage dans un élément sécurisé du dispositif mobile ;
un dispositif de réception du fournisseur de services, conçu pour recevoir un numéro de compte de carte réelle (RCA) correspondant à un compte de paiement ; et
un dispositif de traitement du fournisseur de services, conçu pour identifier des attributs du RCA et identifier un numéro de compte en nuage mobile (MCA) en se basant sur les attributs du RCA ;
le dispositif de réception du fournisseur de services étant en outre conçu pour recevoir une clé privée d'éditeur, un certificat de clé privée d'éditeur et un certificat de clé publique d'éditeur ;
le dispositif de génération du fournisseur de services étant en outre conçu pour générer un certificat de clé publique ICC en se basant sur la certification de la clé publique ICC par la clé privée d'éditeur ;
le dispositif de traitement du fournisseur de services étant en outre conçu pour créer un script d'édition de message conçu pour stocker des données de compte en nuage mobile dans l'élément sécurisé du dispositif mobile, les données de compte en nuage mobile incluant au moins le certificat de clé publique d'éditeur, le MCA, et le certificat de clé publique ICC ;
le dispositif de transmission du fournisseur de services étant en outre conçu pour transmettre le script d'édition de message créé au dispositif mobile ; et
la base de données de mise en correspondance du fournisseur de services étant conçue pour stocker un enregistrement de mise en correspondance,
enregistrements de mise en correspondance incluant au moins l'identifiant de clé maîtresse, le MCA, et le RCA.

8. Système selon la revendication 7, comprenant en outre :
un dispositif de validation du fournisseur de services,
la base de données du fournisseur de services étant en outre conçue pour stocker une pluralité d'enregistrements de mise en correspondance, chaque enregistrement de mise en correspondance incluant au moins un identifiant de clé maîtresse, un numéro de compte en nuage mobile (MCA), et un numéro de compte de carte réelle (RCA), et dans lequel le MCA est basé sur des attributs du RCA ; et
le dispositif de réception du fournisseur de services étant en outre conçu pour recevoir des données de transaction relatives à une transaction financière, les données de transaction incluant au moins un MCA et un cryptogramme de paiement,
le dispositif de validation du fournisseur de services étant en outre conçu pour valider le cryptogramme de paiement ;
le dispositif de traitement du fournisseur de services étant en outre conçu pour identifier, dans la base de données de mise en correspondance, un enregistrement de mise en correspondance spécifique, l'enregistrement de mise en correspondance spécifique incluant le MCA inclus dans les données de transaction reçues ; et
le dispositif de transmission du fournisseur de services étant en outre conçu pour transmettre au moins le RCA inclus dans l'enregistrement de mise en correspondance spécifique et un résultat de validation indiquant une réussite ou un échec de la validation du cryptogramme de paiement.

9. Système selon la revendication 8, dans lequel
le dispositif de réception du fournisseur de services est en outre conçu pour recevoir une réponse d'autorisation de la part d'un éditeur associé au RCA, la réponse d'autorisation incluant au moins le RCA inclus dans l'enregistrement de mise en correspondance spécifique et une indication d'approbation ou de refus de la transaction financière, et
le dispositif de transmission du fournisseur de services étant en outre conçu pour transmettre une réponse d'autorisation incluant le MCA inclus dans l'enregistrement de mise en correspondance spécifique en réponse à une demande d'autorisation.

10. Dispositif mobile pour la fourniture de références de paiement pour une transaction financière, comprenant :
un dispositif d'entrée ;
un élément sécurisé ;
une base de données non incluse dans l'élément sécurisé ;
un dispositif de réception conçu pour recevoir des données de personnalisation, les données de personnalisation incluant au moins une clé publique de carte à circuit intégré (ICC), une clé privée ICC, une clé maîtresse ICC, et un identifiant de clé maîtresse ; et
un dispositif de traitement conçu pour stocker, dans un premier emplacement de l'élément sécurisé, les données de personnalisation reçues,
le dispositif de réception étant en outre conçu pour recevoir au moins un script d'édition de message, chacun desdits au moins un script d'édition de messages étant conçu pour amener le dispositif de traitement à stocker, dans un second emplacement de l'élément sécurisé, des données de compte en nuage mobile incluant au moins un certificat de clé publique d'éditeur, un certificat de clé publique ICC en se basant sur une certification de la clé publique ICC par une clé privée d'éditeur et un numéro de compte en nuage mobile (MCA),
le dispositif de traitement étant en outre conçu pour stocker l'au moins un script d'édition de message reçu dans la base de données,
le dispositif d'entrée étant conçu pour recevoir une indication d'un MCA inclus dans un script d'édition de message spécifique de l'au moins un script d'édition de message reçu, le dispositif de traitement étant en outre conçu pour exécuter le script d'édition de message spécifique, et
le MCA étant basé sur les attributs d'un numéro de compte de carte réelle (RCA).

11. Dispositif mobile selon la revendication 10, comprenant en outre :
un dispositif de génération conçu pour générer un cryptogramme de paiement en se basant au moins sur une partie des données de compte en nuage mobile,
le dispositif de transmission étant en outre conçu pour transmettre, via une communication à champ proche, au moins le cryptogramme de paiement généré et le MCA indiqué.

12. Support d'enregistrement non transitoire lisible par ordinateur comportant des instructions de programme sauvegardées dedans qui amènent un processeur d'un dispositif de calcul mobile à :
recevoir des données de personnalisation, les données de personnalisation incluant au moins une clé publique de carte à circuit intégré (ICC), une clé privée ICC, une clé maîtresse ICC, et un identifiant de clé maîtresse ;
stocker, dans un premier emplacement d'un élément sécurisé, les données de personnalisation reçues ;
recevoir au moins un script d'édition de message, chacun de l'au moins un script d'édition de message étant conçu pour stocker, dans un second emplacement de l'élément sécurisé, des données de compte en nuage mobile, les données de compte en nuage mobile incluant au moins un certificat de clé publique d'éditeur, un certificat de clé publique ICC basé sur la certification de la clé publique ICC par une clé privée d'éditeur et un numéro de compte en nuage mobile (MCA) ;
stocker, dans une base de données non incluse dans l'élément sécurisé, l'au moins un script d'édition de message reçu ;
recevoir une indication d'un MCA inclus dans un script d'édition de message spécifique de l'au moins un script d'édition de message reçu ; et
exécuter le script d'édition de message spécifique,
le MCA étant basé sur des attributs d'un numéro de compte de carte réelle (RCA).
